# EUROPEAN PATENT APPLICATION

(11) **EP 4 679 810 A1**
(43) Date of publication of application: **14.01.2026**
(21) Application number: 25187039.0
(22) Date of filing: 02.07.2025
(51) Int. Cl.: H04N 1/60

(54) **A METHOD OF PRINTING A COLOR IMAGE OF AN IMAGE FILE ONTO A SUBSTRATE**

(30) Priority: 11.07.2024 EP 24188080
(71) Applicant: Unilin, BV, 8710 Wielsbeke (BE); Interprint GmbH, 59759 Arnsberg (DE)
(72) Inventor: BOUTMANS, Beauregard, 8710 Wielsbeke (BE); CLEMENT, Benjamin, 8710 Wielsbeke (BE); TADDAY, Malte, 59755 ARNSBERG (DE); DAVID, Robert, 59494 SOEST (DE)
(74) Representative: Unilin Technologies

(57) **Abstract**

A method of printing a color image of an image file onto a substrate (12) for decorative panels using a digital printer (10), the method comprising the following steps:
at a first point in time:
a) printing a plurality of color samples in a number of different colors on a substrate (12), said color samples comprising a reproduction of each color in a plurality of sample areas having the same color but different tonal values;
b) generating a first characteristic curve for each color by measuring the sample areas of each color and storing the first characteristic curves of each color in a primary file;

at a second point in time that is after the first point in time:
c) repeating step a) using the same colors and the same type of substrate;
d) generating a new characteristic curve for each color by measuring the sample areas of each color printed in step c) and storing the new characteristic curves of each color in a secondary file;
e) adapting the image file by means of the secondary file such that the colors are printed with the first characteristic curves of the primary file and printing the color image (18) of the adapted image file, or
e') adapting the printer's (10) settings by means of the secondary file such that the colors are printed with the first characteristic curves of the primary file and printing the color image (18) of the image file.

## Description

The present invention relates to a method of printing a color image of an image file onto a substrate for decorative panels such as floor panels, wall panels, ceiling panels or furniture panels. In the manufacture of such panels, a sheet of material, e.g. a core paper of a panel or a foil, is digitally printed with a color image for producing various designs. The paper layers, paper sheets or foils are increasingly being printed digitally with inkjet technology. In order to achieve a satisfactory printing result when printing these substrates with inkjet technology, a maximum amount of ink that can be printed must first be defined and adapted to the substrate.

Inks are absorbed by substrates in different ways. The visual impression of a print is also influenced by the color of the substrate. In order to obtain a sufficiently accurate prediction of a single-color or multi-color print, sample areas that are made up of primary colors, secondary colors, tertiary colors and / or quaternary colors are first printed on the substrate. It is known for each color field how it is constructed from image data. These fields are then measured spectrophotometrically and are converted by means of software into a profile, in particular an ICC profile. The profile converts the data values of an image file into the strength of a printer's primary colors. For example, RGB data from the image file is converted into CMYK values of the printer or CMYK data from the image file is converted into C'M'Y'K' values of the printer.

Such profiles are not only available for inkjet printing but also for other output devices such as monitors or displays. With the help of the profiles of the output devices, it is then possible to display an image file on the output devices in such a way that it appears largely in the desired colors.

However, the difficulty arises that small changes of the output devices (displays, monitors, printers) or of the substrates can lead to significant color changes. A greater absorbency of a paper can lead to the ink penetrating deeper into the paper and thus appearing weaker in color. This is usually compensated for by altering the image file to correct the deviation. After correcting the image data, a new image file is output.

However, when correcting the image data, often several repetitions are necessary until a satisfactory result is achieved. This is associated with high costs and is very time consuming. In addition, a new image file is created for each original image file, which is only valid at the time of creation. Alternatively, a new profile could be created, which is also only valid at the time of creation and is very time consuming.

Therefore, it is the object of the invention to provide a method of printing a color image of an image file onto a substrate that is less time-consuming and ensures a color-accurate output without repetitive cycles.

The above object is solved by the features of claim 1, which forms the first independent aspect of the invention.

According to the present invention, at a first point in time a plurality of color samples is printed on a substrate in a number of different colors. Said printer may be a first printer of an array of printers. The color samples comprise a reproduction of each color in a plurality of sample areas having the same color but different tonal values. For example, four different colors, for example cyan, magenta, yellow and black (CMYK) or cyan, red, yellow and black (CRYK), are printed on the substrate, wherein each color is printed in five different tonal values resulting in five sample areas for each color and in a total of twenty sample areas. Said tonal values may be expressed as percentages of the amount of ink of a color that a printer may use, where 100% is the maximum amount of ink a printer may use and 0% the minimum. The colors of the color samples preferably comprise at least the primary colors of the printer used at the first point in time. Preferably, said different tonal values cover at least 50%, preferably at least 70%, more preferably at least 80%, even more preferably at least 90%, most preferably at least 95% or even 100%, of the complete range of tonal values that the printer used at the first point in time can print, and this preferably for each color.

Thereafter, at the first point in time a first characteristic curve for each color is generated by measuring the sample areas of each color and the first characteristic curves of each color are stored in a primary file. The measuring is preferably performed using a spectrophotometer. Each first characteristic curve represents a curve that can be achieved with each new print, preferably by limiting the tonal values of each color to at most 99% of the corresponding maximum tonal value, preferably at most 95%, most preferably at most 90%. A characteristic curve may represent the tonal values of a certain color, preferably as a percentage of the maximum tonal value achievable with the printer, against its corresponding color power value such as for example color strength, chroma C* (of the CIELAB color space), saturation S (of the HSB or HSV models) or optical density. It can be defined for example as the density characteristic curve of a respective color. Other descriptions such as dot gain or L*a*b* are also possible. Characteristic curves can be generated using commercial color management software.

At the first point in time the color image of the image file can be printed onto the substrate wherein the colors of the printed image will correspond to the colors of the printed sample areas.

If a color image of the image file needs to be printed at a second point in time that is after the first point in time, the problem arises that small changes of the printer or of the substrate may lead to different results as regards the colors. Therefore, at the second point in time, again a plurality of color samples is printed in a number of different colors on a substrate, wherein the same colors are used that were used at the first point in time. The color samples again comprise a reproduction of each color in a plurality of sample areas having the same color but different tonal values. The different tonal values are preferably the same different tonal values that were used at the first point in time. This simplifies the comparison between the first point in time and the second point in time. The substrate used at the second point in time can be identical to the substrate used at the first point in time (that has for example been stored for a while). However, it can for example also be of the same type of substrate that was used at the first point in time but resulting from another production batch.

After the sample areas have been printed at the second point in time, a new characteristic curve for each color is generated by measuring these sample areas of each color and the new characteristic curves of each color are stored in a secondary file. This allows to either adapt the image file or to adapt the printer's settings by means of the data of the secondary file such that the colors are printed with the first characteristic curves of the primary file. Thus, the colors are printed matching the values of the first characteristic curves of the primary file. Finally, the color image of the image file can be printed, wherein the visual impression of the colors is identical to the print made at the first point in time.

Advantageous embodiments of the invention are defined in subclaims and the description.

The method and apparatus of the present invention are particularly suitable for the production of laminate panels that comprise a printed decorative layer. Such panels comprise a specific paper that needs to be impregnated with a resin after printing. Therefore, the paper is quite porous and absorbing so that a precise control of ink absorption and color consistency is essential. Papers that are particularly suitable to be used for the present invention may have a Gurley value below 40 seconds, in particular below 25 seconds, and in particular below 15 seconds. The Gurley value may be determined using the TAPPI T460 method. A primer on the paper may comprise polyvinyl alcohol and bivalent metal salt.

The method and apparatus of the present invention are also particularly suitable for the production of panels, in particular resilient panels, that comprise a printed decorative layer, wherein the printed decorative layer comprises a synthetic material sheet or foil. The synthetic material is preferably a thermoplastic material such as polyvinyl chloride (PVC), polyethylene (PE), polypropylene (PP), polyester or polyethylene terephthalate (PET). When incorporating these synthetic material sheets or foils for the production of panels, often temperatures exceeding 150°C are employed. These high temperatures may enhance already present color differences, which may lead to significant color differences between panels. Even more, small deviations in the printer may lead to differences in the composition of inks, which upon heating and possibly pressing may lead to significant color differences. The invention thus improves the production of such panels.

According to a first embodiment, the number of colors of the color samples is identical to the number of colors that can be printed with the printer. The number of colors can be at least three and in particular four or five. If color samples of three, four or five colors are printed with different tonal values, a good color fidelity can be achieved. Said colors may for example be cyan, magenta, yellow and black, i.e. CMYK, or cyan, red, yellow and black, i.e. CRYK. In a preferred embodiment, where it is desired to print a wood pattern, said colors may besides CMYK or CRYK further comprise one or more brown colors. This may improve the realism of the printed wood pattern and may reduce ink consumption and the associated printing costs.

According to a further embodiment, color samples for each color can be printed with at least four or in particular five or more different tonal values. Preferably, color samples for each color are printed with at least 10, preferably at least 15, more preferably at least 20, even more preferably at least 50, most preferably at least 75 or at least 100, different tonal values. By using this amount of different tonal values, the image file or the printer's settings may be adapted very precisely, such that even minor deviations between the first characteristic curves at the first moment and the second characteristic curves at the second moment may be accurately corrected. In a preferred embodiment, the inter-distance between said different tonal values is constant. This may allow the entire possible range of tonal values to be tested and corrected accurately, such that a broad range of decorative images or image files may be printed with the correction of the method of the invention. When expressing said tonal values as percentages as described before, said inter-distance is preferably at most 20%, more preferably at most 10%, even more preferably at most 5%, most preferably at most 1% or even 0.5%. This may allow to apply very accurate corrections, such that the second characteristic curves may be mapped very precisely onto the first characteristic curves. Preferably, said inter-distance is at least 2%, more preferably at least 5%, even more preferably at least 10%. This may allow the corrections to be executed more rapidly. The inter-distance may be inversely proportional to the time between the first point in time and the second point in time, meaning that, if more time has elapsed between the first point in time and the second point in time, that the inter-distance may be selected to be smaller as larger deviations between the first characteristic curves and the second characteristic curves may be expected. The inventors obtained excellent results where the inter-distance is between 2% and 15%, for example 5% or 10%, in case the time between the first point in time and the second point in time is less than one week, for example 5 days or 2 days, 1 day or 12 hours.

Preferably, each sample area has the same shape and/or the same surface area. This may ensure that the method applies equally to all colors and all tonal values, providing a high fidelity method. According to a further embodiment, each sample area has a rectangular shape, a square shape, a circular shape, or the shape of any kind of regular polygon,. Each sample area may cover at least four dots, preferably at least 9 dots, more preferably at least sixteen dots, even more preferably at least 25 dots or at least 36 dots, and/or an area of about 4 mm² or more, preferably of at least 6 mm², more preferably of at least 8 mm² or of at least 10 mm². With this embodiment, specific sample areas of a certain size are printed. An area of this size can be printed in high quality but can also be measured with high reliability. The measurement of a sample area is preferably done with a reading device such as a camera or a spectrophotometer. Preferably, the measurement of a sample area is averaged over a part of the sample area, preferably a central part of the sample area, of over the entire sample area. Averaging the measurement out over multiple measurement points may reduce the effects of noise and undesired non-uniformities in the ink, substrate, and other factors.

According to a further embodiment, at the first point in time an image file can be printed and an image profile can be generated that is used to print the image file at the second point in time.

The image profile is for example an ICC profile. This profile will be fixed and will not be changed further. Each time an image file is output, it is used to calculate the output single color intensity.

According to a further embodiment, the new characteristic curves of the secondary file can be mapped onto the first characteristic curves of the primary file. By doing so, no further color corrections are necessary. It is clear that preferably the characteristic curves corresponding to the same color are mapped onto each other, for example the second characteristic curve representing cyan is mapped onto the first characteristic curve representing cyan. By means of the mapping, the characteristic curves of the secondary file are adapted such as to correspond to the characteristic curves of the primary file. In other words, the characteristic curves of the secondary file may be matched to the first characteristic curves of the primary file. This allows to use the adapted or matched characteristic curves of the secondary file to either adapt the image file or to adapt the printer's settings to achieve a high color fidelity without further color corrections being required.

This mapping of the new characteristic curves of the secondary file onto the first characteristic curves of the primary file preferably comprises the step of identifying, preferably for each color, the tonal values for which the characteristic curves representing the same color differ from each other. For example, the first characteristic curve representing the color cyan may be compared to the second characteristic curve representing the color cyan, and the tonal values where these characteristic curves differ from each other are identified. It may be desired that tonal values are only identified when the difference between the characteristic curves, at said tonal value, is equal to or exceeds a predetermined minimum offset, for example ±0.1%, ±0.2%, ±0.5%, ±1% or ±2%. The difference may be determined as a percentage with respect to the lowest of both values. Said difference may be a difference in color intensity, for example in color strength. The mapping may then relate to replacing the identified tonal value of the second characteristic curve, i.e. the tonal value that has a too large difference, by a tonal value of the second characteristic curve that provides the color intensity that matches the color intensity of the identified tonal value of the first characteristic curve. The image file may then be adapted by changing the tonal values of the different colors in the image file based by the corresponding tonal values after the mapping of the second characteristic curves onto the first characteristic curves. As such, the image file may be printed with the first characteristic curves. The adaptation of the printer's settings may proceed in a substantially identical manner, except in that it is the printer's settings instead of the image file's tonal values that are adapted. Preferably, adapting the printer's settings corresponds to an adaptation of the tonal values and/or of the corresponding amount of ink of one or more of the printer's primary colors. For example, the printer's setting of 80% black may be changed to 81% black at the second point in time if, at the second point in time, the color intensity corresponding to the tonal value of 81% black corresponds to the color intensity of 80% black at the first point in time. This makes sure that, after the correction, an appropriate tonal value may be used to obtain the desired color intensity.

Preferably, tonal values that are not printed because they do not form part of the different tonal values, and are therefore not directly present in the characteristic curves, may be determined by means of interpolation, preferably by linear interpolation. This may reduce the number of color samples that need to be printed, reducing the time required to perform the method of the invention.

The method according to the invention can be repeated many times after the first point in time with the primary file remaining unchanged.

According to an embodiment, a first or all first characteristic curves can be linearized by programming the output device so that the characteristic becomes linear. In this way, the strength of the output of a tonal value can be adjusted. With printers as output devices, the amount of ink applied can be adjusted. With monitors or displays, the intensity of the RGB radiation can be adjusted.

According to a further embodiment, the measuring of the sample areas is performed by means of a spectrophotometer or a densitometer.

The singular colors that are printed for different tonal values in the sample areas are measured and the result is a determined output characteristic curve. It represents a characteristic curve that can be achieved with each new output (print) on the output device. It can be defined as the density characteristic curve of the respective output color. Other descriptions of the characteristic curve, such as dot gain, are also possible.

If an image file is to be output again at a later point in time, a new characteristic curve is measured. All usual commercial software for measuring characteristic curves can be used. The data in the image file is then changed so that the original characteristic curve is reproduced by the printer. In this way, for example, a 12% tone yellow in the image file can become a 14% tone yellow in order to achieve the original characteristic curve for 12% yellow. In this case, the color intensity, e.g. the color strength, of the tonal value of 14% yellow of the second characteristic curve corresponding to yellow corresponds to the color intensity of the tonal value of 12% yellow of the first characteristic curve corresponding to yellow. Alternatively, the settings of the printer can be adjusted directly without changing the print file. The settings of the printer may relate to the dot size, droplet volume, firing speed and other parameters. The settings of the printer may also directly relate to the ink output of one or more nozzles of an inkjet printer, for example where a saved value for the ink output is overwritten by a corrected value for the ink output, such that the printer when using the corrected value for the ink output prints the color with the desired color intensity or color strength. For example, if the color intensity when printing at the first point in time using a saved value for the ink output of 45% corresponds to the color intensity when printing at a second point in time using a value of 48% for the ink output (instead of the value of 45%), the settings of the printer may be adjusted by overwriting the saved value of 45% by the corrected value of 48%, such that in future prints the printer will print with the corrected value of 48%.

The conversions and adjustments can be done automatically using suitable commercial software. The new image file can be output but needs no longer to be saved. This allows to always achieve the desired output result with just one image file and one image profile in a single cycle. Since the new characteristic curve is mapped onto the original characteristic curve, no further color corrections are necessary.

It is noted that the method may be repeated multiple times, for example at least two times. If, between the first point in time and the second point in time, the output device has undergone quite some deviations, there may be significant differences between tonal values of the first characteristic curves and tonal values of the second characteristic curves. Correcting these large differences in one step, with the method of the invention, may in extreme cases not be sufficient, and small differences may still remain. Therefore, it may be beneficial to perform the method of the invention at a third point in time, generating third characteristic curves, wherein the first characteristic curves and the third characteristic curves are then matched. With every repetition, the deviation from the first characteristic curves will become smaller. Thus, if very high accuracy is needed, it may be beneficial to perform the method at least a second time. Preferably, at the second point in time, a second amount of different tonal values are printed for each color, and a third amount of different tonal values at a third point in time, wherein the second amount of different tonal values is equal or substantially equal to the third amount of different tonal values. This may provide very accurate corrections. It is further noted that it may also be that the third amount of different tonal values is higher than the second amount of different tonal values. This may allow to first perform a more rapid and possibly less accurate correction, after which a more detailed correction may be performed using more different tonal values. This may require less time to perform the overall correction. These steps may of course also be repeated three or more times.

A suitable output device is a digital printer, in particular an inkjet printer. The printer may have an unwinder and a rewinder and the ink may be dried by heat or radiation. The radiation can be infrared (IR), near-infrared (NIR), ultraviolet (UV) radiation, or electron beams radiation.

The above method has been described in connection with the printing of a color image with a digital printer. However, the same method can be used to display a color image of an image file on a display, such as a monitor. This method corresponds to the method explained above with the difference that the image and the color samples are not printed but displayed. At the second point in time, the color samples can be displayed on the same type of display to achieve a high color fidelity.

It is remarked that said second point in time may also relate a second printer, for example a second printer of the array of printers. In this case, the second characteristic curves, saved in a secondary file, may be the characteristic curves of the second printer. Then, the new characteristic curves of the secondary file can be mapped onto the first characteristic curves of the primary file. As such, it becomes possible to adjust an image file or the second printer's settings in order to print in an identical manner as the printer of the first characteristic curves.

According to a further aspect , which forms the second independent aspect of the invention, the present invention relates to a system for printing a color image of an image file onto a substrate for decorative panels is provided, wherein the system comprises a controller, a printer and a measuring device adapted and configured to enable an execution of the method as described above.

Preferably, each printer, for example of the array of printers, can be configured to print with a set of inks comprising inks corresponding to said number of different colors. Said inks are preferably pigment-containing inks and can be water-based, UV-based or hydro-UV based. Oil-based or solvent-based inks are not excluded. In the most preferred embodiment, said inks comprise at least four inks selected from cyan, magenta, yellow, black, red, light magenta, light red, light cyan and light black and/or white. Preferably, light magenta and/or light red ink can comprise a lower pigment content than the respective non-light ink, preferably less than a fifth of said pigment content.

Printing consistently with the same colors is essential in a manufacturing process, especially where the printed product is not the final product. For example, in the manufacturing of decorative panels such as floor panels, wall panels, ceiling panels or furniture panels, the printed product still undergoes several production steps such as for example impregnation and lamination, before the final product is obtained. Small differences between the colors of printed products may be enhanced in the final product. The method of the first independent aspect may overcome this problems. According to its third independent aspect, the present invention relates to a method for manufacturing a decorative panel comprising a top layer and a support layer connected to the top layer, wherein the top layer comprises at least a printed substrate, wherein the method comprises the following steps:
- Providing a printable substrate;
- Printing said printable substrate with a method according to the first independent aspect, thereby obtaining a printed substrate;
- Providing a support layer;
- Arranging the printed substrate above, preferably directly above, the support layer;
- Connecting the printed substrate to the support layer, preferably by means of heat and/or pressure.

This method has the benefit that the decorative panels obtained with the method of the third independent aspect of the invention will look identical at any moment in the manufacturing cycle. Thus, there is no difference between different decorative panels, such that different production batches are identical enough to be combined with each other, for example in a floor covering or a wall covering, increasing the aesthetic appeal and the mixability of the decorative panels, and thereby reducing the amount of waste material.

In one preferred embodiment, the printable substrate can be made of paper. In case the printable substrate is made of paper, it is preferably in the form of a paper layer having a base paper weight, i.e. without ink receiving layer, higher than 20 grams per square meter, preferably between 50 to 100 grams per square meter, e.g. between 60 and 80 grams per square meter. Preferably, the paper layer is opaque and/or contains titanium oxide as a whitening agent and/or other inorganic fillers. Alternatively, the paper layer may be a colored, pigmented and/or dyed base paper. The paper layer can show a mean air resistance as expressed in Gurley value below 40 sec, preferably below 25 sec. Papers showing said mean air resistance are more prone to impregnation with resins.

In some embodiments it is preferred that the paper layer used for the printable substrate is free from inorganic fillers, like whitening agents or pigments, for example titanium oxide. The paper layer can be made of alfa cellulose.

In a special embodiment the substrate can comprise a paper layer having a base paper weight, i.e. without ink receiving layer, lower than 50 grams per square meter, preferably between 20 to 50 grams per square meter. The paper layer according to this special embodiment can show a mean air resistance as expressed in Gurley value below 15 sec. The paper layer according to this special embodiment can be used during a "dry press operation" during HPL (High Pressure Lamination), CPL (Continuous Pressure Lamination) or DPL (Direct Pressure Lamination). With dry press is meant that the printed paper is not impregnated, but is sandwiched between two paper layers which contain resin and the bonding is performed during lamination.

In another preferred embodiment, the printable substrate can be made of a polymeric material. In the most preferred embodiment, the printable substrate is preferably in the form of a thermoplastic foil, for example made of polyvinyl chloride (PVC), polyethylene (PE), polypropylene (PP), polyester or PET. In this case the printable substrate can comprise a thickness ranging between 40 micron and 200 micron.

In the preferred embodiment, said printable substrate is in form of a sheet or foil. Anyway, in some special embodiment, said printable substrate can be in the form of a rigid board or panel. In this case, the printable substrate can be a wood-based panel, for example medium density fiberboard (MDF) or high density fiberboard (HDF), or it can be a polymeric material-based panel, preferably thermoplastic material, for example made of polyvinylchloride (PVC), polyethylene (PE) or polypropylene (PP), polyester or PET. In this latter case, where the printable substrate is made of a panel of polymeric material, the panel can be a luxury vinyl tile (LVT) or stone polymer composite (SPC) panel. In some other embodiments, the rigid printable substrate can be made of a mineral-based material, like fiber cement material, gypsum, MgO or the like.

The printable substrate can comprise or be provided with an ink receiver layer before being printed upon. In some embodiments the method can comprise the step of providing the printable substrate with the ink receiver layer.

Said ink receiver layer can be or is provided in a predetermined amount between 0.5 g/sqm and 50 g/sqm dry weight.

Preferably the ink receiver layer comprises at least a binder and/or a pigment.

Preferably, said substrate is provided with 0.2 to 10 g/m², and preferably between 0.5 and 5 g/m² dry coating weight of pigment in said ink receiver layer. Preferably said pigment has a BET surface area between 10 and 1600 m²/g, and preferably between 15 and 500 m²/g.

According to the most preferred embodiment, for the pigment of said ink receiver layer at least or mainly silica particles are used. According to variants, for the pigment of said ink receiver layer at least or mainly particles are used chosen from the list consisting of calcium carbonate, alumina, aluminosilicates, ordered mesoporous materials, modified silica, organosilica, modified organosilica, organoalumina, modified alumina, aluminates, modified aluminates, organoaluminates, modified organoaluminates, zeolites, metal organic frameworks and porous polar polymers. According to some deviant embodiments, the ink receiver layer can also be pigment free.

Preferably, said substrate is provided with 0.2 to 7 g/m², and preferably between 0.5 and 5 g/m², dry coating weight of a binder in said ink receiver layer. According to the most preferred embodiment, for the binder in said ink receiver layer at least or mainly polyvinyl alcohols are used.

According to variants, the ink receiver layer includes, as a binder, a polymer selected from the group consisting of hydroxyethyl cellulose; hydroxypropyl cellulose; hydroxyethylmethyl cellulose; hydroxypropyl methyl cellulose; hydroxybutylmethyl cellulose; methyl cellulose; sodium carboxymethyl cellulose; sodium carboxymethylhydroxethyl cellulose; water soluble ethylhydroxyethyl cellulose; cellulose sulfate; vinylalcohol copolymers; polyvinyl acetate; polyvinyl acetal; polyvinyl pyrrolidone; polyacrylamide; acrylamide/acrylic acid copolymer; polystyrene, styrene copolymers; acrylic or methacrylic polymers; styrene/acrylic copolymers; ethylenevinylacetate copolymer; vinyl-methyl ether/maleic acid copolymer; poly(2-acrylamido-2-methyl propane sulfonic acid); poly(diethylene triamine-co-adipic acid); polyvinyl pyridine; polyvinyl imidazole; polyethylene imine epichlorohydrin modified; polyethylene imine ethoxylated; ether bond-containing polymers such as polyethylene oxide (PEO), polypropylene oxide (PPO), polyethylene glycol (PEG) and polyvinyl ether (PVE); polyurethane; melamine resins; gelatin; carrageenan; dextran; gum arabic; casein; pectin; albumin; chitins; chitosans; starch; collagen derivatives; collodion and agar-agar. The most preferred variants for the binder are polyvinyl acetates, ethylvinylacetates, block copolymers based on polyvinyl acetate, block copolymers based on polyvinyl alcohol, acrylates, latexes, polyvinyl derivatives, VCVAC derivatives, polyurethanes based on polyols and isocyanates, polyurethanes based on polycarbamates and polyaldehydes, e.g. both as a watery dispersion/emulsion or a watery or solvent solution.

As stated above preferred binders for the ink receiving layer include polyvinyl alcohol (PVA), but according to variants a vinylalcohol copolymer or modified polyvinyl alcohol may be applied. The modified polyvinyl alcohol may be a cationic type polyvinyl alcohol, such as the cationic polyvinyl alcohol grades from Kuraray, such as POVAL C506, POVAL C118 from Nippon Goshei.

Preferably, said ink receiver layer has, globally seen, a pigment to binder ratio between 0/1 or 0.01/1 and 25/1, preferably between 0/1 or 0.01/1 and 20/1. It is not excluded that the ink receiver layer is non uniform and shows layerwise or areawise differences in composition, in which case the above values are average values for the totality of the inkjet receiver layer.

The ink receiver layer can further comprise a crosslinking agent. Preferably, the ink receiver layer can preferably comprise a content of crosslinking agent below 5% based on dry weight of the composition. The crosslinking agent can be preferably selected from the group consisting of aldehydes, polyaldehydes, dialdehydes, alcohols, boronic acid, borax, polyalcohols, carbamates, polycarbamates, carbonic acids, glyoxal based agent, zirconium-based agents, titanates and polycarbonic acids.

The ink receiver layer can further comprise a dispersant. A dispersant is an oligomer or polymer which stabilizes the liquid dispersions of pigment contained in the ink against flocculation. The dispersant can comprise polycarboxylates, polyphosphates, a polyionic polymer, preferably polyDADMAC (Polydiallyldimethylammonium chloride) polyamine or alumina salts.

Preferably, the ink receiver layer is provided with less than 10%, more preferably less than 5% based on dry coating weight of dispersant, for example between 5 and 0%. Preferably, said ink receiver layer has, globally seen, a pigment to dispersant ratio between 10/1 and 100/1.

The ink receiver layer can also comprise a flocculant, preferably a metal salt, preferably a cationic metal salt. Preferably said metal salt is chosen from the list consisting of CaCl₂, MgCl₂, CaBr₂, MgBr₂, CMA (Calcium Magnesium Acetate), NH₄Cl, Calcium Acetate, ZrCl₄, calcium nitrate and Magnesium Acetate. The positive ion of the dissolved metal salt will tend to neutralize the electrosteric stabilization function of the pigment contained in the ink, thereby improving its absorption. The most preferred cationic metal salts are CaCl₂, MgCl₂, CMA, Calcium Acetate, calcium nitrate and Magnesium Acetate, as the inventors have obtained the best results with these ink reactive compounds. Said flocculant can also be chosen from the list consisting of sodiumaluminate, a double sulphate salt such as alum, polyaluminumchloride, polyacrylate, dicyandiamide (e.g. Floquat DI5 from SNF) and polyacrylamide. The flocculating agent pulls the ink pigments out of the ink dispersion. Thereby the pigments are prevented from penetrating too far down into the ink receiver layer. Mainly the vehicle of the ink, e.g. the water in the case of water-based inks, is absorbed deeper down into the ink receiver layer.

Preferably, the ink receiver layer is provided with 20 to 60%, based on dry coating weight of flocculating agent, in particular of metal salt.

The ink receiver layer may also comprise one or more of the following agents:
- Agents altering, more particularly lowering, the pH of said ink receiver layer. Preferably the pH of the ink receiver layer composition is lowered to pH 6 or lower, by selecting the amount and type of said agent, which selection is within the ambit of the skilled man. Preferably said agent is chosen from the list consisting of formic acid, tartaric acid, acetic acid, hydrochloric acid, citric acid, phosphoric acid, sulfuric acid, AlCl₃ and boronic acid. An adjusted, more particularly lowered pH, preferably to pH 6 or less, increases the chemical affinity of the inkjet receiver layer with the ink and will interfere with the electrosteric stabilization function on the pigment, such that the dispersion of the pigments in the ink will become destabilized quickly.
- Particle surface modifying agents or coupling agents: between 0.05 and 5 g/m², preferably between 0.2 and 2 g/m², e.g. chosen from the non-limiting list consisting of amino silanes, ureido silanes, aldehyde silanes, tetraethylorthosilicate, siliazanes, organically modified silanes, organically modified siliazanes, chlorosilanes, organically modified chlorosilanes, bissilanes, organobissilanes, silsesquioxanes, polysilsesquioxnes, silane oligomers, organically modified silane oligomers, bissilane oligomers, organically modified bissilane oligomers, oligomeric silsesquioxanes, and oligomeric polysilsesquioxanes.
- Additives: wetting agent between 0.005 and 1 g/m², preferably between 0.05 and 0.5 g/m²; and/or defoaming agent between 0.005 and 1 g/m², preferably between 0.05 and 0.5 g/m²; and/or fungicide between 0.005 and 1 g/m², preferably between 0.05 and 0.5 g/m².

According to the most preferred embodiment, said inkjet receiver layer is present on the printable substrate in the form of a unique layer. Anyway, it is not excluded that said inkjet receiver coating is in the form of two layers, respectively a first layer with a first composition and a second layer with a second composition, wherein said first and second composition may be either the same or different compositions.

According to alternative embodiments, the printable substrate or printed substrate can be used for decorative surfaces in general, for example wallpaper.

The support layer can be a wood-based board or panel, such as a particle board or an MDF or HDF board.

Alternatively, the support layer can be made of a polymeric material, preferably a thermoplastic material, for example made of polyvinylchloride (PVC), polyethylene (PE), polypropylene (PP), polyester or PET. It is also possible that the support layer comprises a mineral-based or a cement-based board, for example an MgO-based or a Portland cement board. Said mineral-based or cement-based board can comprise fiber, for example glass or cellulose fibers.

In the preferred embodiment, in case the printed substrate comprises a paper layer, the printed substrate can be impregnated with a resin, more preferably a thermosetting resin. The thermosetting resin can preferably be a melamine-based resin. Preferably the paper layer can be impregnated with a quantity of thermosetting resin equaling 40 to 250% dry weight of resin as compared to weight of the paper. Preferably the paper layer can be provided with such an amount of thermosetting resin, that at least the core of the paper layer is satisfied with the resin. Such satisfaction can be reached when an amount of resin is provided that corresponds to at least 1.5 or at least 2 times the paper weight. It should be clear that the resin, which is provided on the paper layer, is not necessarily only available in the core of the paper, but may form surface layers on both flat sides of the paper. The inkjet receiver coating may then be present on the surface of the paper with the intermediary of such a surface layer of thermosetting resin. Preferably, the obtained resin provided paper layer, i.e. after provision of the thermosetting resin, has a relative humidity lower than 15%, and still better of 10% by weight or lower. Preferably the step of providing said paper layer with thermosetting resin involves applying a mixture of water and the resin on said paper layer. The application of said mixture might involve immersion of the paper layer in a bath of said mixture and/or spraying, jetting or otherwise coating said mixture on said paper. Preferably the resin is provided in a dosed manner, for example by using one or more squeezing rollers and/or doctor blades to set the amount of resin added to the paper layer. Next to melamine-based resin, other alternatives such as urea-based resin, polyurethane-dispersion resin, acrylate dispersion resin and combinations thereof can be used.

The method can then comprise the step of hot pressing the printed and resin provided paper layer, at least to cure the resin. This paper layer can be hot pressed on top of a support layer, preferably a wood-based support layer like MDF or HDF, so that this hot pressing simulates or is part of a DPL process. It is of course not excluded that this hot pressing simulates or is part of a CPL (Compact Laminate) or an HPL (High Pressure Laminate) process in which the printed paper layer is hot pressed at least with a plurality of resin impregnated core paper layers, e.g. of so called Kraft paper, forming a support layer underneath the printed paper layer, and wherein the obtained pressed and cured laminate layer, or laminate board is, in the case of an HPL, glued to a further support layer, such as to a particle board or an MDF or HDF board.

In case of a printable substrate comprising a thermoplastic foil, the method can involve a thermal lamination of said thermoplastic foil with a second thermoplastic foil, for example a transparent thermoplastic foil. Alternatively, the method can involve a thermal lamination of said thermoplastic foil on a support layer, for example a flexible, semirigid or rigid support layer. Said support layer can be made of a polymeric material, a wood-based material or mineral-based material.

Thermal lamination can be conducted at a temperature above 80 °C, preferably above 100 °C.

In the preferred embodiment, wherein the panel is a floor panel, the method may comprise the step of providing said support layer with coupling elements for mechanical coupling to another floor panel. Said step of providing the support layer with coupling elements is preferably performed after that the printed substrate has been provided on the support layer. It is noted that said support layer can also be in the form of a large board that is or is to be cut into multiple panels.

The method of the invention comprises the step of providing said top layer, including at least said printed substrate, onto said support layer. In particular, the decorative layer can be pressed, heat pressed, thermal laminated or glued on top of the support layer. In the most preferred embodiment, the printed substrate is preferably heat pressed on top of the support layer after that it has been impregnated with a resin. Said resin being preferably a melamine-based resin.

The top layer can further comprise a wear layer, preferably a transparent layer and possibly comprising hard particles. Said wear layer can comprise a paper layer impregnated with a resin, preferably the same resin impregnating the printed substrate. In some embodiments, said wear layer can comprise a thermoplastic sheet for example made of PVC or PP. The wear layer can be thermal laminated on top of the printed substrate. The thermal lamination of the wear layer on the decorative layer can happen before, during and or after the printed substrate has been provided on the support layer. For example, the wear layer is thermal laminated on top of the printed substrate in the same step of thermal lamination of the printed substrate itself on top of the support layer. In a second preferred embodiment, the wear layer is thermal laminated on top of the printed substrate to form the top layer and subsequently the top layer is either thermal laminated or glued on top of the support layer.

The method of the invention may comprise the step of forming a relief on the surface of said decorative panel. Said relief is preferably formed at least in said top layer. In the most preferred embodiment, the relief is in register with the printed décor provided on the printed substrate, i.e. the relief has structural features corresponding to structural features of the printed décor. For example, in case of a printed décor representing a wood imitation, the relief has an excavation shaped to imitate a wood pore where the printed décor shows a wood pore.

The relief can be embossed in the top layer during the heat pressing step using an embossment plate or roller. The relief can also be obtained before or after that the top layer, or at least the printed substrate, is provided on the support layer.

An embodiment of the present invention is now described with reference to the drawing, wherein:

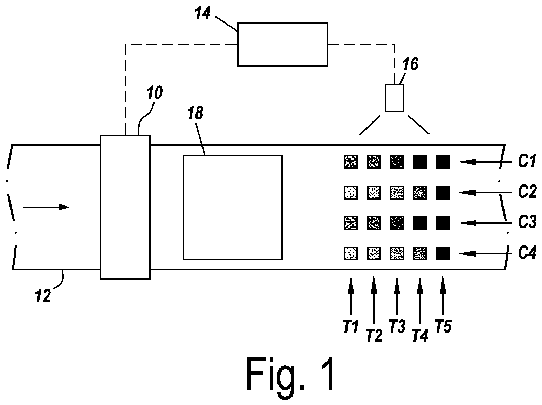

Fig. 1 shows a system for printing a color image onto a substrate.

The system shown in Fig. 1 comprises a digital printer 10 for printing a color image of an image file onto a substrate 12, such as a web or sheet of paper or plastic for decorative panels. The printer 10 is connected to a controller 14 that controls and adjusts the digital printer 10. Furthermore, a measuring device 16 such as a spectrophotometer or densitometer is provided, wherein the output of the measuring device 16 is connected to the controller. Alternatively, the measuring device 16 has a separate controller with a data connection to the controller 14.

With the above system it is possible to print a plurality of color samples in a number of different colors on the substrate 12. In the embodiment shown, four different colors C1, C2, C3 and C4 are printed on the substrate 12 in rectangular color samples wherein the color samples for each color C1 - C4 comprise a reproduction of the respective color in sample areas having the same color C1 - C4 but different tonal values T1 - T5. As an example, colors C1 - C4 could be chosen as C1 = yellow, C2 = yellow + red, C3 = brown and C4 = black. The tonal values T1 to T5 may for example vary between T1 = 10% and T5 = 100%.

After the color samples have been printed on the substrate 12 by means of the printer 10, all sample areas of these color samples are measured by means of the measuring device 16 and a first characteristic curve for each color C1 to C4 is generated and the first characteristic curves of each color are stored in a primary file in the controller 14.

At this point in time, it is also possible to print a color image 18 of the image file that needs to be printed.

At a second point in time that is after the first point in time, the printing of the plurality of color samples is repeated in the same manner as described above wherein the same colors C1 - C4 and the same tonal values T1 - T5 as before are printed. The sample areas can for example be printed on the identical substrate 12 as before or on a same type of substrate, such as the same substrate of a different batch.

Thereafter, the sample areas of each color printed at the second point in time are measured by means of the measuring device 16 and a new characteristic curve for each color is generated and the new characteristic curves for these color are stored in a secondary file in the controller 14.

To achieve a high color fidelity, either the image file in the controller 12 is adapted by means of the secondary file or the settings of the printer 10 are adapted by means of the secondary file such that the colors are printed with the first characteristic curves of the primary file. Thereafter, a color image of the adapted image file or of the original image file with adapted settings can be printed.

The invention further relates to the following list of numbered items.
1. A method of printing a color image of an image file onto a substrate (12) for decorative panels using a digital printer (10), the method comprising the following steps:
   at a first point in time:
      a) printing a plurality of color samples in a number of different colors on a substrate (12), said color samples comprising a reproduction of each color in a plurality of sample areas having the same color but different tonal values;
      b) generating a first characteristic curve for each color by measuring the sample areas of each color and storing the first characteristic curves of each color in a primary file;
   at a second point in time that is after the first point in time:
      c) repeating step a) using the same colors and the same type of substrate;
      d) generating a new characteristic curve for each color by measuring the sample areas of each color printed in step c) and storing the new characteristic curves of each color in a secondary file;
      e) adapting the image file by means of the secondary file such that the colors are printed with the first characteristic curves of the primary file and printing the color image (18) of the adapted image file, or
   e') adapting the printer's (10) settings by means of the secondary file such that the colors are printed with the first characteristic curves of the primary file and printing the color image (18) of the image file.
2. Method according to item 1, wherein the substrate (12) is a core paper or a foil of a decorative panel, in particular of a floor panel, a wall panel, a ceiling panel or a furniture panel.
3. Method according to item 2, wherein the substrate (12) is a paper with a Gurley value below 40 seconds, in particular below 25 seconds and in particular below 15 seconds.
4. Method according to item 1, 2 or 3, wherein the number of colors of the color samples is identical to the number of colors that can be printed with the printer, wherein the number of colors is in particular at least three and in particular four or five.
5. Method according to any one of the preceding items, wherein the colors of the color samples comprise at least the primary colors of the printer used at the first point in time.
6. Method according to any one of the preceding items, wherein each color is printed in steps a) and c) in at least four, in particular five or more, different tonal values.
7. Method according to any one of the preceding items, wherein said different tonal values cover at least 50%, preferably at least 70%, more preferably at least 80%, even more preferably at least 90%, most preferably at least 95% or even 100%, of the complete range of tonal values that the printer used at the first point in time can print, and this preferably for each color.
8. Method according to any one of the preceding items, wherein each sample area has a minimum size of 16 dots and/or an area of about 4 mm².
9. Method according to any one of the preceding items, wherein each sample area has the same shape and/or the same surface area.
10. Method according to any one of the preceding items, wherein at the first point in time an image file is printed and an image profile, in particular an ICC profile, is generated that is used to print the image file at the second point in time.
11. Method according to item 10, wherein the image profile that is used to print the image file at the second point in time is identical to the generated image profile.
12. Method according to any one of the preceding items, wherein the new characteristic curves of the secondary file are mapped onto the first characteristic curves of the primary file.
13. Method according to any one of the preceding items, wherein the mapping of the new characteristic curves of the secondary file onto the first characteristic curves of the primary file comprises the step of identifying, preferably for each color, the tonal values for which the characteristic curves representing the same color differ from each other.
14. Method according to any one of the preceding items, wherein steps c) to e') are repeated at different points in time that are after the second point in time with the primary file remaining unchanged.
15. Method according to any one of the preceding items, wherein at least one first characteristic curve is linearized after its generation.
16. Method according to any one of the preceding items, wherein the measuring in step b) and/or d) is performed by means of a spectrophotometer or a densitometer.
17. Method according to any one of the preceding items, wherein printer settings are adjusted to linearize the first characteristic curves generated in step b).
18. Method according to any of the preceding items, wherein the method is repeated multiple times, for example at least two times.
19. A system for printing a color image of an image file onto a substrate for decorative panels, comprising a controller, a printer and a measuring device, adapted and configured to enable an execution of the method of any one of the preceding items.
20. A method of displaying a color image of an image file on a display, the method comprising the following steps:
   at a first point in time:
      a) displaying a plurality of color samples in a number of different colors on the display, said color samples comprising a reproduction of each color in a plurality of sample areas having the same color but different tonal values;
      b) generating a first characteristic curve for each color by measuring the sample areas of each color and storing the first characteristic curves of each color in a primary file;
   at a second point in time that is after the first point in time:
      c) repeating step a) using the same colors and the same type of display;
      d) generating a new characteristic curve for each color by measuring the sample areas of each color displayed in step c) and storing the new characteristic curves of each color in a secondary file;
      e) adapting the image file by means of the secondary file such that the colors are displayed with the first characteristic curves of the primary file and displaying the color image of the adapted image file, or
      e') adapting the display's settings such that the colors are displayed with the first characteristic curves of the primary file and displaying the color image of the image file.

## Claims

1. A method of printing a color image of an image file onto a substrate (12) for decorative panels using a digital printer (10), the method comprising the following steps:
at a first point in time:
a) printing a plurality of color samples in a number of different colors on a substrate (12), said color samples comprising a reproduction of each color in a plurality of sample areas having the same color but different tonal values;
b) generating a first characteristic curve for each color by measuring the sample areas of each color and storing the first characteristic curves of each color in a primary file;
at a second point in time that is after the first point in time:
c) repeating step a) using the same colors and the same type of substrate;
d) generating a new characteristic curve for each color by measuring the sample areas of each color printed in step c) and storing the new characteristic curves of each color in a secondary file;
e) adapting the image file by means of the secondary file such that the colors are printed with the first characteristic curves of the primary file and printing the color image (18) of the adapted image file, or
e') adapting the printer's (10) settings by means of the secondary file such that the colors are printed with the first characteristic curves of the primary file and printing the color image (18) of the image file.

2. Method according to claim 1, wherein the substrate (12) is a core paper or a foil of a decorative panel, in particular of a floor panel, a wall panel, a ceiling panel or a furniture panel.

3. Method according to claim 2, wherein the substrate (12) is a paper with a Gurley value below 40 seconds, in particular below 25 seconds and in particular below 15 seconds.

4. Method according to claim 1, 2 or 3, wherein the number of colors of the color samples is identical to the number of colors that can be printed with the printer, wherein the number of colors is in particular at least three and in particular four or five.

5. Method according to any one of the preceding claims, wherein each color is printed in steps a) and c) in at least four, in particular five or more, different tonal values.

6. Method according to any one of the preceding claims, wherein each sample area has a minimum size of 16 dots and/or an area of about 4 mm².

7. Method according to any one of the preceding claims, wherein at the first point in time an image file is printed and an image profile, in particular an ICC profile, is generated that is used to print the image file at the second point in time.

8. Method according to claim 7, wherein the image profile that is used to print the image file at the second point in time is identical to the generated image profile.

9. Method according to any one of the preceding claims, wherein the new characteristic curves of the secondary file are mapped onto the first characteristic curves of the primary file.

10. Method according to any one of the preceding claims, wherein steps c) to e') are repeated at different points in time that are after the second point in time with the primary file remaining unchanged.

11. Method according to any one of the preceding claims, wherein at least one first characteristic curve is linearized after its generation.

12. Method according to any one of the preceding claims, wherein the measuring in step b) and/or d) is performed by means of a spectrophotometer or a densitometer.

13. Method according to any one of the preceding claims, wherein printer settings are adjusted to linearize the first characteristic curves generated in step b).

14. A system for printing a color image of an image file onto a substrate for decorative panels, comprising a controller, a printer and a measuring device, adapted and configured to enable an execution of the method of any one of the preceding claims.

15. A method of displaying a color image of an image file on a display, the method comprising the following steps:
at a first point in time:
a) displaying a plurality of color samples in a number of different colors on the display, said color samples comprising a reproduction of each color in a plurality of sample areas having the same color but different tonal values;
b) generating a first characteristic curve for each color by measuring the sample areas of each color and storing the first characteristic curves of each color in a primary file;
at a second point in time that is after the first point in time:
c) repeating step a) using the same colors and the same type of display;
d) generating a new characteristic curve for each color by measuring the sample areas of each color displayed in step c) and storing the new characteristic curves of each color in a secondary file;
e) adapting the image file by means of the secondary file such that the colors are displayed with the first characteristic curves of the primary file and displaying the color image of the adapted image file, or
e') adapting the display's settings such that the colors are displayed with the first characteristic curves of the primary file and displaying the color image of the image file.
